# EUROPEAN PATENT SPECIFICATION

(11) **EP 1 188 009 B1**
(45) Date of publication and mention of the grant of the patent: **14.01.2004**
(21) Application number: 00929772.2
(22) Date of filing: 27.04.2000
(51) Int. Cl.: F16K 31/60

(54) **VALVE OR TAP WITH BLOCKING DEVICE FOR THE STOPPER**
VENTIL ODER HAHN MIT BLOCKIEREINRICHTUNG FÜR DEN BEGRENZER
SOUPAPE OU TROU TARAUDE AVEC DISPOSITIF DE BLOCAGE POUR STOPPEUR

(30) Priority: 18.06.1999 IT BS990062
(43) Date of publication of application: 20.03.2002
(73) Proprietor: Valvosanitaria Bugatti S.p.A., 25045 Castegnato (IT)
(72) Inventor: BUGATTI, Vittorio, I-25045 Castegnato (IT)
(74) Representative: Crippa, Paolo Ernesto
(86) International application number: PCT/IT2000/000164
(87) International publication number: WO 2000/079165

(56) References cited:
- DE-A- 2 013 157
- FR-A- 1 401 702
- GB-A- 2 146 412
- US-A- 4 015 817
- US-A- 4 813 455

## Description

The invention relates to an aircraft landing gear and is primarily concerned with a landing gear which, in use, is attached at four-points to part of an airframe.

Where an undercarriage having four mounting members connected to the airframe by four attachments is locked in a down position, the loading in the individual mounting members is statically indeterminate and deflection of the airframe can induce substantial forces in the individual mounting members.

Document DE417051 discloses an aircraft landing gear having a three-point location in which one of the attachments includes a coil spring.

An object of the present invention is to provide a landing gear in which such induced loading will be reduced.

According to a first aspect of the invention there is provided an aircraft landing gear having four mounting members to be attached to an airframe of the aircraft via respective attachments for mounting the landing gear in a locked down position, one of the attachments, in the locked down position, being displaceable in a first direction but substantially non-displeceable in a second direction transverse to the said first direction thereby to reduce induced loading in the members resulting from airframe deflection.

In that way, the landing gear is much more able to accommodate loading resulting from the aforesaid airframe deflection as the load which would otherwise be induced in the mounting members is reduced.

According to a second aspect of the invention there is provided an aircraft landing gear including a plurality of mounting members to be attached to an airframe of the aircraft via respective attachments, one of the attachments being displaceable in one direction with its associated mounting member being substantially non-displaceable in a transverse direction thereby reducing induced loading in the members resulting from airframe deflection.

Preferably, the displaceable attachment is displaceable in an up-and-down direction in relation to the aircraft.

Preferably, the displaceable attachment or associated mounting member is non-displaceable in a side-to-side sense in relation to the fore-and-aft direction of the aircraft. In that way, sideways stability of the landing gear remains unaffected by the use of the displaceable attachment and torque on the landing gear leg can still be reacted through the displaceable attachment.

The displaceable attachment is preferably flexible and, in that respect, may be a spring such as a leaf spring. In the latter case, the leaf spring may extend in a side-to-side direction in relation to the aircraft to provide the sideways stability and torque reaction capabilities, as previously discussed.

In a preferred embodiment, the displaceable attachment defines a pintle axis for its associated mounting member, which may be a landing gear leg, or "main fitting".

Preferably, the displaceable attachment comprises an arm which, in use, is pivotally mounted at one end to the airframe. In such a case, the aforesaid pintle axis is spaced from the pivotal mounting for the arm. Conveniently, the opposite end of the arm may, in use, be pivotally connected to the airframe through a link. The link permits displacement of the arm to take place about the pivot at the one end of the arm without inducing longitudinal forces in the arm.

The member associated with the displaceable attachment may be a forward mounting member of the landing gear.

In a preferred embodiment, two of the said mounting members are in the form of side stays.

According to a third aspect of the invention there is provided a landing gear according to the first or second said aspect of the invention or any of the consistory clauses relating thereto.

According to a fourth aspect of the invention there is provided an aircraft wing having landing gear thereon according to the first or second said aspect of the invention or any of the consistory clauses relating thereto.

According to a fifth aspect of the invention there is provided an aircraft having a landing gear according to the first or second said aspect of the invention or any of the consistory clauses relating thereto.

An aircraft landing gear according to the invention will now be described by way of example with reference to the accompanying drawings in which: -
Fig 1 is a diagrammatic perspective view of one form of landing gear in accordance with the invention and

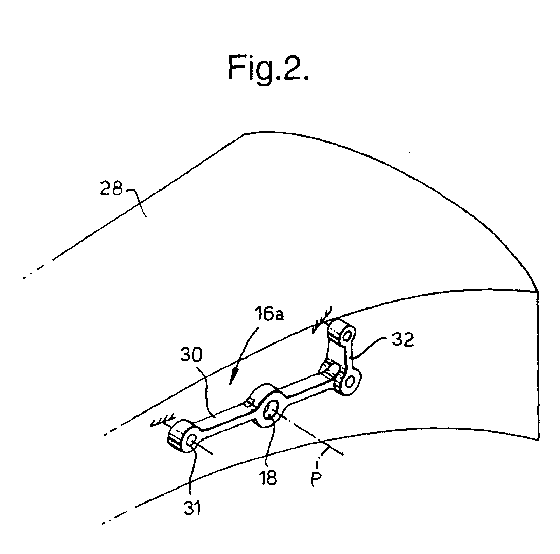

Fig 2 is a perspective view to a larger scale of a displaceable attachment of the landing gear of Fig 1.

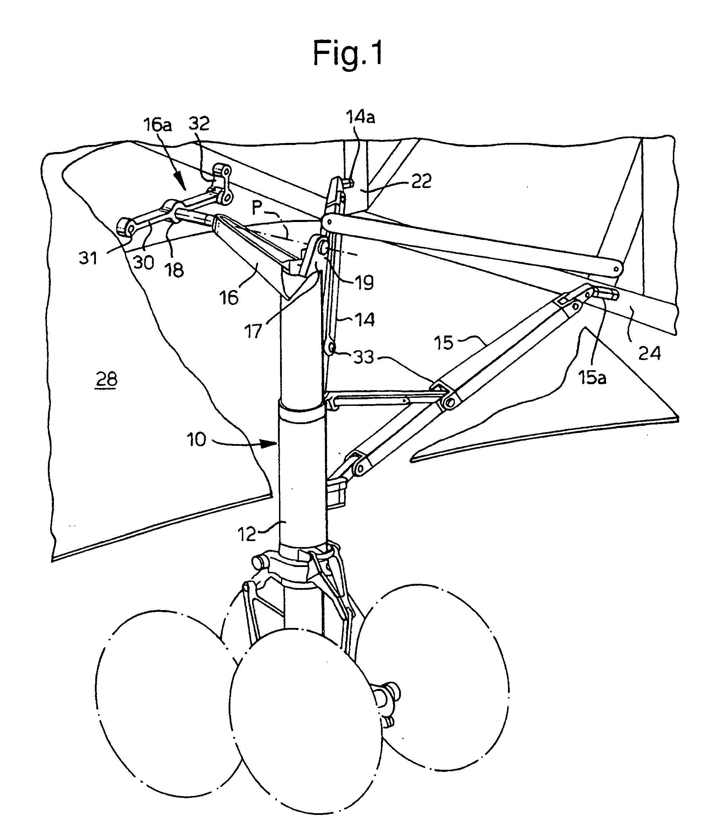

In Fig 1 a landing gear is generally indicated at 10 and basically comprises a leg 12 connected to fore-and-aft side stays 14, 15 respectively. The leg 12 is also connected through arms 16, 17 to front and rear pintle bearings 18, 19. The pintle bearings 18, 19 define a common fore-and-aft axis P known as the pintle axis. The side stays 14, 15 and pintle bearings 18, 19 effectively form a four point attachment for the landing gear, the side stays being connected by attachments 14a, 15a to parts 22, 24 of a fuselage. The pintle bearing 18 is connected by an attachment 16a to a wing 28 extending from the fuselage and the pintle bearing 19 is connected to the wing 28 and/or fuselage by a further attachment (not shown).

As mentioned above, a four point attachment is a statically indeterminate structure. Relative deflection between the wing 28 and the fuselage tends to induce substantial forces in the structure and the present invention is intended to accommodate such relative deflection and reduce such induced loading.

The attachment 16a comprises a displaceable member which, in the embodiment shown, is in the form of a leaf spring 30. The leaf spring 30 is mounted on a pivot 31 at one end which is itself mounted on the wing 28 and is pivotally connected at its other end to a link 32 which is itself pivotally connected to the wing 28. The pintle bearing 18 is positioned on the leaf spring 30 about midway between the ends of the leaf spring.

With the landing gear 10 supporting the aircraft, the side stays 14, 15 act to brace the leg 12 against pivoting about the pintle axis P. When the landing gear is to be retracted, each side stay 14, 15 articulates about a centre pivot 33 in response to the unlocking and folding of a pair of lock links (not shown) acting between the leg 12 and its associated side stay. Operation of a retraction actuator (not shown) then raises the undercarriage leg 12 about the pintle axis P to a stowed position in the wheel bay (not shown).

Should relative deflection occur between the wing 28 and fuselage with the landing gear 10 in the Fig 1 position, ie with the side stays locked, the resulting forces induced in the side stays 14, 15 and the arms 16, 17 will cause the arm 16 to displace the leaf spring 30 upwards or downwards so that it flexes between the pivot 31 and the link 32. Such deflections can be induced whenever the side stays are locked as aforesaid, such as when the aircraft is sitting stationary on the ground, when wing bending occurs in flight before gear retraction, and when the aircraft touches down upon landing. In the latter circumstances in particular both drag loads on the gear and "springback" loads occurring immediately after touchdown can cause the leaf spring 30 to deflect both downwardly and upwardly respectively. The link 32 is designed to prevent a build up of axial force in the leaf spring 30 resulting from displacement of the spring. In that way, the landing gear 10 is much more able to accommodate loading resulting from the aforesaid relative deflection and reduces the load which would otherwise be induced in the side stays 14, 15 and arms 16, 17.

The use of the leaf spring 30 mounted on the pin 31 provides resistance against sideways movement thereby providing positive sideways location for the arm 16. In that way, the front pintle bearing 18 will react against side loading. Also, the spring 30 is sufficiently flexible to allow controlled flexibility in the up and down direction whilst at the same time supporting the pintle bearing 14 with sufficient stiffness to provide an accurate location for the pintle bearing during gear retraction and deployment. It is also sufficiently stiff to resist large deflections of the landing gear 10 due to air-induced loads after take off or when coming in to land.

## Claims

1. An aircraft landing gear having four mounting members (14, 15, 16, 17) to be attached to an airframe of the aircraft via respective attachments (14a, 15a, 16a, 19) for mounting the landing gear in a locked down position, **characterized in that** one of the attachments (16a), in the locked down position, being displaceable in a first direction but substantially non-displaceable in a second direction transverse to the said first direction thereby to reduce induced loading in the members (14, 15, 16, 17) resulting from airframe deflection.

2. An aircraft landing gear according to claim 1 in which a pintle axis P for a leg (12) of the landing gear is defined through the displaceable attachment (16a).

3. An aircraft landing gear according to claim 1 or claim 2 in which the first direction is a direction upwards and downwards in relation to the aircraft.

4. An aircraft landing gear according to claim 1, 2, or 3 in which the second direction comprises a side-to-side direction in relation to the fore-and-aft direction of the aircraft.

5. An aircraft landing gear according to any preceding claim in which the displaceable attachment (16a) includes a spring.

6. An aircraft landing gear according to claim 5 in which the spring (30) is a leaf spring.

7. An aircraft landing gear according to any preceding claim in which the displaceable attachment (16a) comprises an arm (30) which, in use, is pivotally mounted at one end (31) to the airframe.

8. An aircraft landing gear according to claim 7 when dependent on claim 2 in which the pintle axis P is spaced from the pivotal mounting (31) for the arm (30).

9. An aircraft landing gear according to claim 7 or 8 in which the opposite end of the arm is, in use, pivotally connected to the airframe through a link (32).

10. An aircraft landing gear according to any preceding claim in which the mounting members include side-stays (14, 15).

11. An aircraft wing (28) including a landing gear (10) according to any preceding claim.

12. An aircraft fuselage (22, 24) including a landing gear (10) according to any of claims 1 to 10.

13. An aircraft including a landing gear (10) according to any of claims 1 to 10.

## Patentansprüche

1. Flugzeugfahrwerk mit vier Montagegliedern (14, 15, 16, 17), die an der Flugzeugzelle über jeweilige Befestigungsmittel (14a, 15a, 16a, 19) festlegbar sind, um das Fahrgestell in ausgefahrener Stellung zu verriegeln,
**dadurch gekennzeichnet, dass** eines der Befestigungsmittel (16a) in ausgefahrener Stellung in einer ersten Richtung versetzbar, aber in einer zweiten Stellung quer zur ersten Richtung im Wesentlichen nicht versetzbar ist, um dadurch die in die Montageglieder (14, 15, 16, 17) eingeführten Belastungen, die von der Auslenkung der Flugzeugzelle herrühren, zu vermindern.

2. Flugzeugfahrwerk nach Anspruch 1, bei welchem eine Gelenkachse P für ein Bein (12) des Fahrwerks durch die versetzbaren Befestigungsmittel (16a) definiert ist.

3. Flugzeugfahrwerk nach den Ansprüchen 1 oder 2, bei welchem die erste Richtung eine Richtung stromauf und stromab bezüglich das Flugzeugs ist.

4. Flugzeugfahrwerk nach den Ansprüchen 1, 2 oder 3, bei welchem die zweite Richtung eine Richtung seitlich bezüglich der Vorwärts-Rückwärts-Richtung des Flugzeugs ist.

5. Flugzeugfahrwerk nach einem der vorhergehenden Ansprüche, bei welchem die versetzbaren Befestigungsmittel (16a) eine Feder aufweisen.

6. Flugzeugfahrwerk nach Anspruch 5, bei welchem die Feder (30) eine Blattfeder ist.

7. Flugzeugfahrwerk nach einem der vorhergehenden Ansprüche, bei welchem die versetzbaren Befestigungsmittel (16a) einen Arm (30) aufweisen, der im Betrieb schwenkbar an einem Ende (31) der Flugzeugzelle angelenkt ist.

8. Flugzeugfahrwerk nach Anspruch 7 bei Abhängigkeit von Anspruch 2, bei welchem die Gelenkachse P von dem Schwenklager (31) für den Arm (30) distanziert ist.

9. Flugzeugfahrwerk nach Anspruch 7 oder 8, bei welchem das gegenüberliegende Ende des Armes im Betrieb schwenkbar mit der Flugzeugzelle über einen Lenker (32) verbunden ist.

10. Flugzeugfahrwerk nach einem der vorhergehenden Ansprüche, bei welchem die Montageglieder Seitenstreben (14, 15) aufweisen.

11. Flugzeugtragflügel (28) mit einem Fahrwerk (10) nach einem der vorhergehenden Ansprüche.

12. Flugzeugrumpf (22, 24) mit einem Fahrwerk (10) nach einem der Ansprüche 1 bis 10.

13. Flugzeug mit einem Fahrwerk (10) gemäß einem der Ansprüche 1 bis 10.

## Revendications

1. Un train d'atterrissage pour aéronef ayant quatre éléments de montage (14, 15, 16, 17) devant être attachés à une cellule de l'aéronef par le biais d'attaches respectives (14a, 15a, 16a, 19) pour monter le train d'atterrissage dans une position verrouillée basse, **caractérisé en ce que** l'une des attaches (16a), dans la position verrouillée basse, est déplaçable dans un premier sens mais substantiellement non déplaçable dans un deuxième sens transversal audit premier sens, afin de réduire, de ce fait, le chargement induit dans les éléments (14, 15, 16, 17) résultant de la déformation de la cellule.

2. Un train d'atterrissage pour aéronef selon la revendication 1 dans lequel un axe de goujon P pour une jambe (12) du train d'atterrissage est défini par l'intermédiaire de l'attache déplaçable (16a).

3. Un train d'atterrissage pour aéronef selon la revendication 1 ou la revendication 2 dans lequel le premier sens est un sens allant vers le haut et vers le bas par rapport à l'aéronef.

4. Un train d'atterrissage pour aéronef selon la revendication 1, la revendication 2 ou la revendication 3 dans lequel le deuxième sens comporte un sens latéral par rapport au sens longitudinal de l'aéronef.

5. Un train d'atterrissage pour aéronef selon n'importe quelle revendication précédente dans lequel l'attache déplaçable (16a) comprend un ressort.

6. Un train d'atterrissage pour aéronef selon la revendication 5 dans lequel le ressort (30) est un ressort à lames.

7. Un train d'atterrissage pour aéronef selon n'importe quelle revendication précédente dans lequel l'attache déplaçable (16a) comporte un bras (30), lequel, lors de l'utilisation, est monté de façon pivotante à une extrémité (31) de la cellule.

8. Un train d'atterrissage pour aéronef selon la revendication 7 lorsqu'elle dépend de la revendication 2 dans lequel l'axe de goujon P est espacé du montage pivotant (31) pour le bras (30).

9. Un train d'atterrissage pour aéronef selon la revendication 7 ou la revendication 8 dans lequel l'extrémité opposée du bras est raccordée, lors de l'utilisation, à la cellule par l'intermédiaire d'une liaison (32).

10. Un train d'atterrissage pour aéronef selon n'importe quelle revendication précédente dans lequel les éléments de montage comprennent des contrefiches latérales (14, 15).

11. Une aile d'aéronef (28) comprenant un train d'atterrissage (10) selon n'importe quelle revendication précédente.

12. Un fuselage d'aéronef (22, 24) comprenant un train d'atterrissage (10) selon n'importe lesquelles des revendications 1 à 10.

13. Un aéronef comprenant un train d'atterrissage (10) selon n'importe lesquelles des revendications 1 à 10.
